# EUROPEAN PATENT SPECIFICATION

(11) **EP 2 975 821 B1**
(45) Date of publication and mention of the grant of the patent: **25.11.2020**
(21) Application number: 15176615.1
(22) Date of filing: 14.07.2015
(51) Int. Cl.: H04L 29/06, H04W 12/08, H04W 8/26, H04W 48/12, H04W 48/20, H04W 88/12

(54) **NETWORK CONNECTION METHOD AND APPARATUS**
NETZWERKVERBINDUNGSVERFAHREN UND -VORRICHTUNG
PROCÉDÉ ET APPAREIL DE CONNEXION DE RÉSEAU

(30) Priority: 17.07.2014 CN 201410341364
(43) Date of publication of application: 20.01.2016
(73) Proprietor: Xiaomi Inc., Beijing 100085 (CN)
(72) Inventor: WAN, Yuzhen, 100085 Haidian District (CN); PENG, Tao, 100085 Haidian District (CN); HAN, Wei, 100085 Haidian District (CN)
(74) Representative: Robson, Aidan John

(56) References cited:
- WO-A2-2008/036938
- US-A1- 2007 066 280
- US-A1- 2013 024 915
- US-A1- 2013 210 379
- US-A1- 2014 059 218

## Description

### TECHNICAL FIELD

The present disclosure relates to the field of network technologies, and more particularly, to a network connection method and a network connection apparatus.

### BACKGROUND

At present, many business entities and shops provides free wireless fidelity (WiFi) network access services. When a user enters a shop, the user's terminal searches out a wireless access point of the WiFi network, and can access the WiFi network via the wireless access point.

Related technologies provide a network connection method. The method includes: searching for, by a terminal, a wireless access point of a WiFi network, sending a Hypertext Transfer Protocol (HTTP) request to a network provision server via the wireless access point; receiving an identity authentication page from the network provision server via the wireless access point; inputting a mobile phone number into the identity authentication page and sending the page to the network provision server; receiving an verification code; inputting verification information into the identity authentication page and sending the page to the network provision server; and adding a media access control (MAC) address sent by the terminal into a network access white list (a list of terminals which are allowed to access the network) in the wireless access point when the network provision server verifies that the verification information is the same as the verification code. In a next access to the WiFi network by the terminal, the wireless access point allows the network access behavior of the terminal according to the network access white list, and tracks the network access behavior of the terminal according to the mobile phone number.

During implementation of the present disclosure, the inventors of the present disclosure have identified that at least the following defects exist in related technologies: during terminal's access to a WiFi network, a mobile phone number needs to be input, and verification information needs to be input according to a verification code received thereupon, thereby causing a relatively complicated WiFi network access process for the terminal, and reducing the network connection efficiency.

### SUMMARY

To solve the problem that the network connection efficiency is low in the case of connecting to the network by inputting a mobile phone number and verification information in a terminal, the present disclosure provides a network connection method and a network connection apparatus.

A network connection method, comprising:
Searching (101) for a predetermined wireless access point;
reading (102)terminal information of a terminal when the predetermined wireless access point is discovered, the terminal information comprising a terminal identifier and a terminal media access control (MAC) address of the terminal; and
sending (103) the terminal information to the predetermined wireless access point, such that the predetermined wireless access point forwards the terminal information to a network provision server whereupon the network provision server stores the terminal identifier and adds the terminal MAC address into a network access white list in the predetermined wireless access point; wherein the terminal MAC address in the network access white list is used for instructing the predetermined wireless access point to allow a network access behavior of the terminal, and the terminal identifier is used for providing a tracking identity for the network provision server to track the network access behavior of the terminal; characterized in that the searching for a predetermined wireless access point comprises: receiving a service set identifier (SSID) name broadcast by a wireless access point; detecting whether the SSID name satisfies a predetermined condition, the predetermined condition comprising at least one of: the SSID name pertains to a predetermined name set, and a naming rule of the SSID name satisfies a predetermined rule; and determining the wireless access point as the predetermined wireless access point when it is detected that the SSID name satisfies the predetermined condition.

Optionally, the reading terminal information of a terminal includes:
reading the terminal MAC address recorded in the terminal;
reading the terminal identifier recorded in the terminal, or reading a user account which has been logged in to the terminal and acquiring a terminal identifier corresponding to the user account; and
determining the terminal MAC address and the terminal identifier as the terminal information.

Optionally, the acquiring a terminal identifier corresponding to the user account includes:

sending an access request for accessing an account server to the predetermined wireless access point, the access request carrying the user account, whereupon the wireless access point determines that the account server is in the network access white list, and forwards the access request to the account server, the network access white list including names of various servers which the terminal is allowed to access when the terminal is not networked; and

receiving the terminal identifier from the account server, the terminal identifier being an identifier that is searched out by the account server and corresponds to the user account.

Optionally, the searching for a predetermined wireless access point includes:
receiving an access point MAC address broadcast by a wireless access point;
detecting whether the access point MAC address is within a predetermined address segment; and
determining the wireless access point as the predetermined wireless access point when it is detected that the access point MAC address is within the predetermined address segment.

A network connection apparatus, comprising:
an access point searching module (310), configured to search for a predetermined wireless access point;
an information reading module (320), configured to read terminal information of a terminal when the access point searching module discovers the predetermined wireless access point, the terminal information comprising a terminal identifier and a terminal media access control (MAC) address of the terminal; and
an information sending module (330), configured to send the terminal information read by the information reading module to the predetermined wireless access point, such that the predetermined wireless access point forwards the terminal information to a network provision server whereupon the network provision server stores the terminal identifier and adds the terminal MAC address into a network access white list in the predetermined wireless access point;
wherein the terminal MAC address in the network access white list is used for instructing the predetermined wireless access point to allow a network access behavior of the terminal, and the terminal identifier is used for providing a tracking identity for the network provision server to track the network access behavior of the terminal;
characterized in that the access point searching module comprises:
   a second receiving unit (314), configured to receive a service set identifier (SSID) name broadcast by a wireless access point;
   a second detecting unit (315), configured to detect whether the SSID name received by the second receiving unit satisfies a predetermined condition, the predetermined condition comprising at least one of: the SSID name pertains to a predetermined name set, and a naming rule of the SSID name satisfies a predetermined rule; and
   a second determining unit (316), configured to determine the wireless access point as the predetermined wireless access point when the second detecting unit detects that the SSID name satisfies the predetermined condition.

Optionally, the information reading module includes:
a first reading unit, configured to read the terminal MAC address recorded in the terminal;
a second reading unit, configured to read the terminal identifier recorded in the terminal, or read a user account which has been logged in to the terminal and acquire a terminal identifier corresponding to the user account.

Optionally, the second reading unit includes:
a request sending subunit, configured to send an access request for accessing an account server to the predetermined wireless access point, the access request carrying the user account, whereupon the wireless access point determines that the account server is in the network access white list, and forwards the access request to the account server, the network access white list including names of various servers which the terminal is allowed to access when the terminal is not networked; and
an identifier receiving subunit, configured to receive the terminal identifier from the account server, the terminal identifier being an identifier that is searched out by the account server and corresponds to the user account.

Optionally, the access point searching module includes:
a first receiving unit, configured to receive an access point MAC address broadcast by a wireless access point;
a first detecting unit, configured to detect whether the access point MAC address received by the first receiving unit is within a predetermined address segment; and
a first determining unit, configured to determine the wireless access point as the predetermined wireless access point when the first detecting unit detects that the access point MAC address is within the predetermined address segment.

A network connection apparatus, comprising:
a processor (502); and
a memory (504) for storing instructions executable by the processor;
wherein the processor is configured to execute the instructions and thereby perform the steps of any of claims 1 to 4.

According to a fourth aspect of embodiments of the present disclosure, there is provided a computer program which, when being executed on a processor of an apparatus, performs any one of the above methods.

The technical solutions provided in the embodiments of the present disclosure may achieve the following beneficial effects:
By searching for a predetermined wireless access point, terminal information of a terminal is read if the predetermined wireless access point is discovered, wherein the terminal information includes a terminal identifier and a terminal MAC address of the terminal; the terminal information is sent to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal, wherein the terminal MAC address in the network access white list is used for instructing the predetermined wireless access point to allow a network access behavior of the terminal, and the terminal identifier is used for providing a tracking identity for the network provision server to track the network access behavior of the terminal. When the predetermined wireless access point is searched out, the terminal information may be automatically read instead of acquiring the terminal information according to user's inputs; the read terminal information is sent to the network provision server, such that a user's tracking identity is identified via the terminal information; the network provision server allows, according to the tracking identity, the terminal to connect to the network. In this way, the problem that the network connection efficiency is low in the case of connecting to the network by inputting a mobile phone number and verification information in the terminal is solved, and an effect of improving the network connection efficiency is achieved.

It shall be appreciated that the above general description and the detailed description hereinafter are only illustrative but not for limiting the present disclosure

The invention is defined by the appended independent claims.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
FIG. 1 is a flowchart illustrating a network connection method according to an exemplary embodiment of the present disclosure;
FIG. 2 is a flowchart illustrating a network connection method according to another exemplary embodiment of the present disclosure;
FIG. 3 is a block diagram illustrating a network connection apparatus according to an exemplary embodiment of the present disclosure;
FIG. 4 is a block diagram illustrating a network connection apparatus according to another exemplary embodiment of the present disclosure; and
FIG. 5 is a block diagram illustrating an apparatus for use in network connection according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

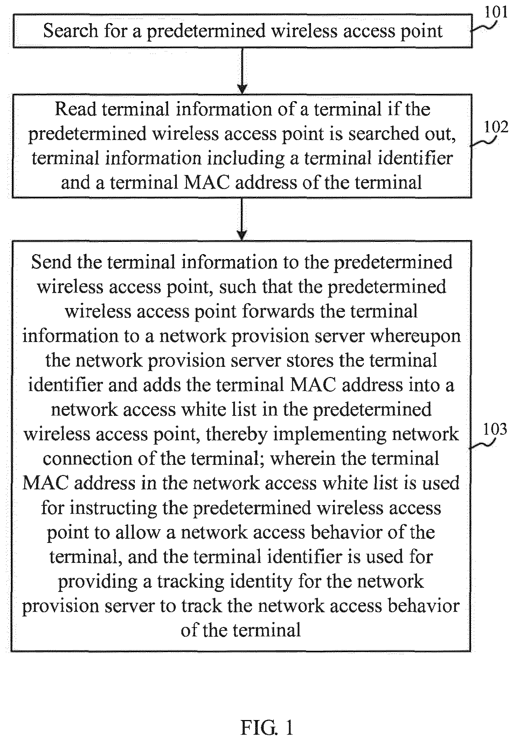

FIG. 1 is a flowchart illustrating a network connection method according to an exemplary embodiment of the present disclosure. The network connection method is applied in a terminal. As illustrated in FIG. 1, the network connection method includes the following steps.

In step 101, a predetermined wireless access point is searched for.

The predetermined wireless access point is a wireless access point that is set in advance, and is used for providing wireless network access services for the terminal.

In step 102, terminal information of a terminal is read when the predetermined wireless access point is discovered, wherein the terminal information includes a terminal identifier and a terminal MAC address of the terminal.

The terminal information includes a terminal identifier and a terminal MAC address. The terminal identifier is information for identifying a user who uses the terminal. That is, a tracking identity that can be tracked is provided, which complies with the legal provisions prohibiting providing network services for terminals whose tracking identities are not provided. The terminal MAC address is information provided for the wireless access point for identification, to determine whether to allow the network access behavior of the terminal.

If searching out the predetermined wireless access point, the terminal automatically reads the terminal information, and thus the user does not need to manually input the terminal information. This not only reduces the operation complexity, but also improves the information acquisition efficiency.

In step 103, the terminal information is sent to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal; wherein the terminal MAC address in the network access white list is used for instructing the predetermined wireless access point to allow a network access behavior of the terminal, and the terminal identifier is used for providing a tracking identity for the network provision server to track the network access behavior of the terminal.

The network provision server is a server corresponding to the predetermined wireless access point, and is used for providing wireless network access services for the terminal.

The network access white list includes terminal MAC addresses of various terminals. The wireless access point allows network access behaviors of the terminals indicated by the terminal MAC addresses thereof in the network access white list. The network access white list is provided by the network provision server to the predetermined wireless access point.

The terminal sends the terminal information to the predetermined wireless access point. The predetermined wireless access point forwards the terminal information to the corresponding network provision server. The network provision server stores the terminal identifier included in the terminal information, and adds the terminal MAC address into the network access white list, thereby completing the process of accessing by the terminal to the wireless network.

Upon discovering out the predetermined wireless access point, the terminal may automatically acquire the terminal information to access the wireless network, and thus the user does not need to input the mobile phone number and the verification information to access the wireless network. Therefore, the network connection efficiency may be improved by improving the information acquisition efficiency.

In conclusion, with the network connection method according to the present disclosure, by searching for a predetermined wireless access point, terminal information of a terminal is read if the predetermined wireless access point is discovered, wherein the terminal information includes a terminal identifier and a terminal MAC address of the terminal; the terminal information is sent to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal, wherein the terminal MAC address in the network access white list is used for instructing the predetermined wireless access point to allow a network access behavior of the terminal, and the terminal identifier is used for providing a tracking identity for the network provision server to track the network access behavior of the terminal. When the predetermined wireless access point is discovered, the terminal information may be automatically read instead of acquiring the terminal information according to user's inputs; the read terminal information is sent to the network provision server, such that a user's tracking identity is identified via the terminal information; the network provision server allows, according to the tracking identity, the terminal to connect to the network. In this way, the problem that the network connection efficiency is low in the case of connecting to the network by inputting a mobile phone number and verification information in the terminal is solved, and an effect of improving the network connection efficiency is achieved.

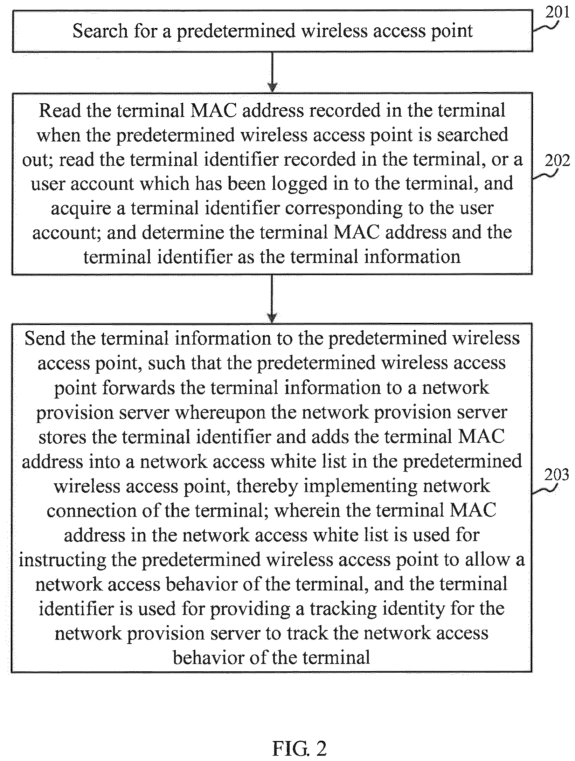

FIG. 2 is a flowchart illustrating a network connection method according to another exemplary embodiment of the present disclosure. The network connection method is applied in a terminal. As illustrated in FIG. 2, the network connection method includes the following steps.

In step 201, a predetermined wireless access point is searched for.

The predetermined wireless access point is a wireless access point that is set in advance, and is used for providing wireless network access services for the terminal. The predetermined wireless access point in this embodiment may be provided by a third party, for example, provided by a manufacturer of wireless access points.

The wireless access point periodically broadcasts access point information outside. Therefore, the terminal may discover many wireless access points therearound, and the terminal needs to select the predetermined wireless access point from the discovered wireless access points. The terminal may select the predetermined wireless access point in many ways. This embodiment gives description by using the following two selection ways as examples.

Firstly, the searching for a predetermined wireless access point includes:
1) receiving an access point MAC address broadcast by a wireless access point;
2) detecting whether the access point MAC address is within a predetermined address segment; and
3) determining the wireless access point as the predetermined wireless access point when it is detected that the access point MAC address is within the predetermined address segment.

Each wireless access point has a unique access point MAC address. For differentiation from a common wireless access point, the access point MAC address of the predetermined wireless access point may be set within a predetermined address segment. In this case, the terminal may acquire the predetermined address segment, and select the predetermined wireless access point from the wireless access points according to the predetermined address segment.

When selecting the predetermined wireless access point, the terminal acquires access point information broadcast by a wireless access point, reads an access point MAC address of the wireless access point from the access point information, and detects whether the access point MAC address is within the predetermined address segment. If it is detected that the access point MAC address is within the predetermined address segment, it is determined that the wireless access point is the predetermined wireless access point, and the selection process ends. If it is detected that the access point MAC address is not within the predetermined address segment, it is determined that the wireless access point is not the predetermined wireless access point, and access point information broadcast by a next wireless access point is continuously acquired until the selection process ends upon successful selection of the predetermined wireless access point.

It should be supplemented that since the access point MAC address of a wireless access point is unique, selecting the predetermined wireless access point via the access point MAC address achieves a high accuracy.

Secondly, the searching for a predetermined wireless access point includes:
1) receiving an SSID name broadcast by a wireless access point;
2) detecting whether the SSID name satisfies a predetermined condition, wherein the predetermined condition includes at least one of: the SSID name pertains to a predetermined name set, and a naming rule of the SSID name satisfies a predetermined rule; and
3) determining the wireless access point as the predetermined wireless access point when it is detected that the SSID name satisfies the predetermined condition.

Each wireless access point has an SSID name, and the wireless access point may be distinguished from a common wireless access point by further setting the SSID name of the predetermined wireless access point. This embodiment provides two methods for setting the SSID name of the predetermined wireless access point. The first method is randomly defining an SSID name for the predetermined wireless access point, and adding the SSID name into a predetermined name set, wherein the predetermined name set is used for storing SSID names of the predetermined wireless access point. The second method is defining an SSID name for the predetermined wireless access point according to a predetermined rule, and distinguishing the predetermined wireless access point from a common wireless access point via the SSID name.

a. If an SSID name is defined for the predetermined wireless access point by using the first method, the terminal further needs to pre-acquire a predetermined name set, and select the predetermined wireless access point from a plurality of wireless access points according to the predetermined name set.

When selecting the predetermined wireless access point, the terminal acquires access point information broadcast by a wireless access point, reads an SSID name of the wireless access point from the access point information, and detects whether the SSID name pertains to the predetermined name set. If it is detected that the SSID name pertains to the predetermined name set, it is determined that the wireless access point is the predetermined wireless access point, and the selection process ends. If it is detected that the SSID name does not pertain to the predetermined name set, it is determined that the wireless access point is not the predetermined wireless access point, and access point information broadcast by a next wireless access point is continuously acquired until the selection process ends upon successful selection of the predetermined wireless access point.

For example, assume that the SSID name of a wireless access point searched out by the terminal is "City Garden", and the predetermined name set includes "City Garden", "City and Alley", and "Dian Dian", then the terminal may detect that the predetermined name set includes the SSID name of the wireless access point, and determine that the wireless access point is the predetermined wireless access point.

Optionally, the terminal may further acquire the predetermined name set at intervals of a predetermined time period, and update the predetermined name set stored in the terminal, to improve the accuracy in determining the predetermined wireless access point.

b. If an SSID name is defined for the predetermined wireless access point by using the second method, the terminal further needs to pre-acquire a predetermined rule, and select the predetermined wireless access point from a plurality of wireless access points according to the predetermined rule.

When selecting the predetermined wireless access point, the terminal acquires access point information broadcast by a wireless access point, reads an SSID name of the wireless access point from the access point information, and detects whether the SSID name satisfies the predetermined rule. If it is detected that the SSID name satisfies the predetermined rule, it is determined that the wireless access point is the predetermined wireless access point, and the selection process ends. If it is detected that the SSID name does not satisfy the predetermined rule, it is determined that the wireless access point is not the predetermined wireless access point, and access point information broadcast by a next wireless access point is continuously acquired until the selection process ends upon successful selection of the predetermined wireless access point.

For example, the predetermined rule is that the SSID name of the predetermined wireless access point includes the word "Garden". Assume that the SSID name of a wireless access point searched out by the terminal is "City Garden", the terminal may detect that the SSID name includes the word "Garden", and determine that the wireless access point is the predetermined wireless access point.

The SSID name of the wireless access point and the predetermined rule may both be modified. Therefore, optionally, the terminal may further acquire the predetermined rule at intervals of a predetermined time period, and update the predetermined rule stored in the terminal, to improve the accuracy in determining the predetermined wireless access point.

In step 202, when the predetermined wireless access point is searched out, the terminal MAC address recorded in the terminal is read; the terminal identifier recorded in the terminal is read, or a user account which has been logged in to the terminal is read, and a terminal identifier corresponding to the user account is acquired; the terminal MAC address and the terminal identifier are determined as the terminal information.

The terminal information includes a terminal identifier and a terminal MAC address. The terminal identifier is information for identifying a user who uses the terminal. That is, a tracking identity that can be tracked is provided, which complies with the legal provisions prohibiting providing network services for terminals whose tracking identities are not provided. The terminal MAC address is information provided for the wireless access point for identification, to determine whether to allow the network access behavior of the terminal.

When searching out the predetermined wireless access point, the terminal reads the terminal information thereof, i.e., the terminal acquires the terminal MAC address recorded in the terminal; the terminal identifier recorded in the terminal is read, or a user account which has been logged in to the terminal is read, and a terminal identifier corresponding to the user account is acquired; the terminal MAC address and the terminal identifier are determined as the terminal information. The terminal may automatically reads the terminal information, and thus the user does not need to manually input the terminal information. This not only reduces the operation complexity, but also improves the information acquisition efficiency.

The terminal may firstly read the terminal MAC address, and then read the terminal identifier; or the terminal may firstly read the terminal identifier, and then read the terminal MAC address; or the terminal may simultaneously read the terminal identifier and the terminal MAC address. This embodiment sets no limitation to the sequence of reading the terminal MAC address and reading the terminal identifier by the terminal.

When reading a terminal MAC address, since each terminal records a terminal MAC address, the terminal may directly read the terminal MAC address thereof.

In this embodiment, when the terminal is a mobile phone, the terminal identifier may be at least one of an International Mobile Equipment Identity (IMEI) and a mobile phone number. When reading an IMEI, since each terminal records a terminal MAC address, the terminal may directly read the terminal MAC address thereof. When reading a mobile phone number, if a terminal or subscriber identity module (SIM) card records a mobile phone number, the terminal may directly read the mobile phone number; if neither the terminal nor SIM card records a mobile phone number, the terminal may also acquire a user account, and acquire a mobile phone number corresponding to the user account. The user account may be an x Mi account, or the like.

During acquisition of a user account, if a user has logged in to the terminal via a user account, the terminal may automatically read the user account; if the user has not logged in to the terminal via a user account, the terminal may display an input box for inputting a user account, and acquire the user account input by the user from the input box. Upon acquiring the user account, the terminal may acquire the terminal identifier corresponding to the user account.

During acquisition of the terminal identifier corresponding to a user account, if the terminal stores a correspondence relationship between user accounts and terminal identifiers, the terminal may search for the terminal identifier corresponding to a user account in the correspondence relationship; if the terminal does not store the correspondence relationship between user accounts and terminal identifiers, the terminal further needs to query the terminal identifier from an account server from which a user account is applied for.

Accordingly, the acquiring a terminal identifier corresponding to the user account includes:
1) sending an access request for accessing an account server to the predetermined wireless access point, wherein the access request carries the user account, whereupon the wireless access point determines that the account server is in the network access white list, and then forwards the access request to the account server, wherein the network access white list includes names of various servers which the terminal is allowed to access when the terminal is not networked; and
2) receiving the terminal identifier from the account server, the terminal identifier being an identifier that is searched out by the account server and corresponds to the user account.

Since the terminal is in a state where terminal's access to other servers except the network provision server is prohibited, when the terminal sends an access request to a predetermined wireless access point, the predetermined wireless access point would deny the network access behavior of the terminal. Therefore, to ensure that the terminal can acquire the terminal identifier, the account server needs to be added to the network access white list in advance.

When the predetermined wireless access point receives the access request, if it is detected that the terminal is in the state where terminal's access to other servers except the network provision server is prohibited, it is continuously detected whether the account server receiving the access request is in the network access white list. If it is detected that the account server is in the network access white list, the predetermined wireless access point forwards the access request to the account server. Upon receiving the access request, the account server reads a user account carried in the access request, searches for a terminal identifier corresponding to the user account, and sends the terminal identifier to the terminal via the predetermined wireless access point. Hereby, the terminal acquires the terminal identifier.

In step 203, the terminal information is sent to the predetermined wireless access point, such that the predetermined wireless access point forwards the terminal information to a network provision server, whereupon the network provision server stores the terminal identifier and adds the terminal MAC address into a network access white list in the predetermined wireless access point, thereby implementing network connection of the terminal; wherein the terminal MAC address in the network access white list is used for instructing the predetermined wireless access point to allow a network access behavior of the terminal, and the terminal identifier is used for providing a tracking identity for the network provision server to track the network access behavior of the terminal.

The network provision server is a server corresponding to the predetermined wireless access point, and is used for providing wireless network access services for the terminal.

The network access white list includes terminal MAC addresses of various terminals. The wireless access point allows network access behaviors of the terminals indicated by the terminal MAC addresses thereof in the network access white list. The network access white list is provided by the network provision server to the predetermined wireless access point. For example, the network provision server may add the terminal MAC address into a network access white list stored in the server, and send the network access white list to the predetermined wireless access point at intervals of a predetermined time period; or the network provision server may add the terminal MAC address into a network access white list stored in the server, and send the network access white list to the predetermined wireless access point upon receiving a name list acquisition request from the predetermined wireless access point.

The terminal sends the terminal information to the predetermined wireless access point. The predetermined wireless access point forwards the terminal information to the corresponding network provision server. The network provision server stores the terminal identifier included in the terminal information, and then adds the terminal MAC address into the network access white list, thereby completing the process of accessing by the terminal to the wireless network.

It should be supplemented that when a terminal accesses the network via a pre-assigned Internet Protocol (IP) address, the terminal needs to send a webpage access request to a predetermined wireless access point; upon detecting that the network access white list includes the terminal MAC address of the terminal, the predetermined wireless access point allows the network access behavior of the terminal, i.e., forwards the webpage access request to a corresponding webpage server, such that the webpage server sends webpage content requested by the webpage access request to the terminal. During the process of accessing the network by the terminal via an IP address, the network provision server tracks each network access behavior of the terminal according to a tracking identity provided by the terminal identifier.

Upon searching out the predetermined wireless access point, the terminal may automatically acquire the terminal information to access the wireless network, and thus the user does not need to input the mobile phone number and the verification information to access the wireless network. Therefore, the network connection efficiency may be improved by improving the information acquisition efficiency.

In conclusion, with the network connection method according to the present disclosure, by searching for a predetermined wireless access point, terminal information of a terminal is read if the predetermined wireless access point is discovered, wherein the terminal information includes a terminal identifier and a terminal MAC address of the terminal; the terminal information is sent to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal, wherein the terminal MAC address in the network access white list is used for instructing the predetermined wireless access point to allow a network access behavior of the terminal, and the terminal identifier is used for providing a tracking identity for the network provision server to track the network access behavior of the terminal. When the predetermined wireless access point is searched out, the terminal information may be automatically read instead of acquiring the terminal information according to user's inputs; the read terminal information is sent to the network provision server, such that a user's tracking identity is identified via the terminal information; the network provision server allows, according to the tracking identity, the terminal to connect to the network. In this way, the problem that the network connection efficiency is low in the case of connecting to the network by inputting a mobile phone number and verification information in the terminal is solved, and an effect of improving the network connection efficiency is achieved.

In addition, an access request for accessing an account server is sent to the predetermined wireless access point, wherein the access request carries a user account. Upon determining that the account server is in the network access white list, the predetermined wireless access point forwards the access request to the account server, wherein the network access white list includes names of various servers which the terminal is allowed to access when the terminal is not networked. The predetermined wireless access point receives a terminal identifier from the account server, wherein the terminal identifier is an identifier that is searched out by the account server and corresponds to the user account. In this way, the problem that, in the case of failure to acquire the terminal identifier from a terminal, the network connection efficiency is low due to connection to the network by inputting a mobile phone number and verification information in the terminal is solved, and an effect of improving the network connection efficiency is achieved.

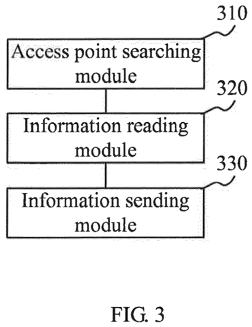

FIG. 3 is a block diagram illustrating a network connection apparatus according to an exemplary embodiment of the present disclosure. The network connection apparatus is applied in a terminal. As illustrated in FIG. 3, the network connection apparatus includes: an access point searching module 310, an information reading module 320, and an information sending module 330.

The access point searching module 310 is configured to search for a predetermined wireless access point.

The information reading module 320 is configured to read terminal information of a terminal when the access point searching module 310 searches out the predetermined wireless access point, wherein the terminal information includes a terminal identifier and a terminal MAC address of the terminal.

The information sending module 330 is configured to send the terminal information read by the information reading module 320 to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal; wherein the terminal MAC address in the network access white list is used for instructing the predetermined wireless access point to allow a network access behavior of the terminal, and the terminal identifier is used for providing a tracking identity for the network provision server to track the network access behavior of the terminal.

In conclusion, with the network connection apparatus according to the present disclosure, by searching for a predetermined wireless access point, terminal information of a terminal is read if the predetermined wireless access point is discovered, wherein the terminal information includes a terminal identifier and a terminal MAC address of the terminal; the terminal information is sent to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal, wherein the terminal MAC address in the network access white list is used for instructing the predetermined wireless access point to allow a network access behavior of the terminal, and the terminal identifier is used for providing a tracking identity for the network provision server to track the network access behavior of the terminal. When the predetermined wireless access point is discovered, the terminal information may be automatically read instead of acquiring the terminal information according to user's inputs; the read terminal information is sent to the network provision server, such that a user's tracking identity is identified via the terminal information; the network provision server allows, according to the tracking identity, the terminal to connect to the network. In this way, the problem that the network connection efficiency is low in the case of connecting to the network by inputting a mobile phone number and verification information in the terminal is solved, and an effect of improving the network connection efficiency is achieved.

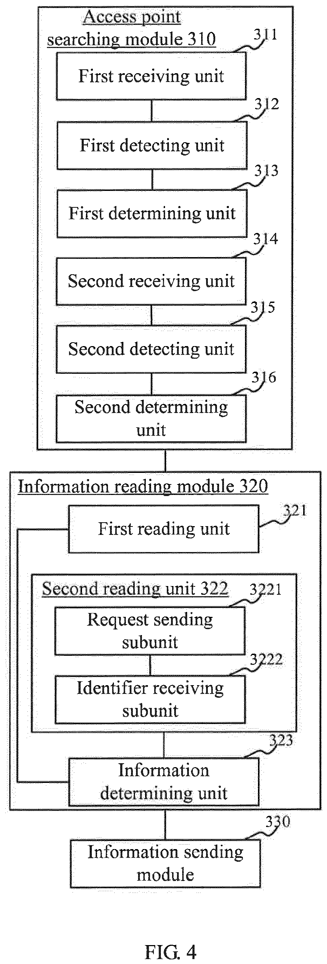

FIG. 4 is a block diagram illustrating a network connection apparatus according to an exemplary embodiment of the present disclosure. The network connection apparatus is applied in a terminal. As illustrated in FIG. 4, the network connection apparatus includes: an access point searching module 310, an information reading module 320, and an information sending module 330.

The access point searching module 310 is configured to search for a predetermined wireless access point.

The information reading module 320 is configured to read terminal information of a terminal when the access point searching module 310 searches out the predetermined wireless access point, wherein the terminal information includes a terminal identifier and a terminal MAC address of the terminal.

The information sending module 330 is configured to send the terminal information read by the information reading module 320 to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal; wherein the terminal MAC address in the network access white list is used for instructing the predetermined wireless access point to allow a network access behavior of the terminal, and the terminal identifier is used for providing a tracking identity for the network provision server to track the network access behavior of the terminal.

Optionally, the information reading module 320 includes: a first reading unit 321, a second reading unit 322, and an information determining unit 323.

The first reading unit 321 is configured to read the terminal MAC address recorded in the terminal.

The second reading unit 322 is configured to read the terminal identifier recorded in the terminal, or read a user account which has been logged in to the terminal and acquire a terminal identifier corresponding to the user account.

The information determining unit 323 is configured to determine the terminal MAC address read by the first reading unit 321 and the terminal identifier read by the second reading unit 322 as the terminal information.

Optionally, the second reading unit 322 includes: a request sending subunit 3221 and an identifier receiving subunit 3222.

The request sending subunit 3221 is configured to send an access request for accessing an account server to the predetermined wireless access point, the access request carrying the user account, whereupon the wireless access point determines that the account server is in the network access white list, and then forwards the access request to the account server, the network access white list including names of various servers which the terminal is allowed to access when the terminal is not networked.

The identifier receiving subunit 3222 is configured to receive the terminal identifier from the account server, wherein the terminal identifier is an identifier that is discovered by the account server and corresponds to the user account.

Optionally, the access point searching module 310 includes: a first receiving unit 311, a first detecting unit 312, and a first determining unit 313.

The first receiving unit 311 is configured to receive an access point MAC address broadcast by a wireless access point.

The first detecting unit 312 is configured to detect whether the access point MAC address received by the first receiving unit 311 is within a predetermined address segment.

The first determining unit 313 is configured to determine the wireless access point as the predetermined wireless access point when the first detecting unit 312 detects that the access point MAC address is within the predetermined address segment.

Optionally, the access point searching module 310 includes: a second receiving unit 314, a second detecting unit 315, and a second determining unit 316.

The second receiving unit 314 is configured to receive an SSID name broadcast by a wireless access point.

The second detecting unit 315 is configured to detect whether the SSID name received by the second receiving unit 314 satisfies a predetermined condition, wherein the predetermined condition includes at least one of: the SSID name pertains to a predetermined name set, and a naming rule of the SSID name satisfies a predetermined rule.

The second determining unit 316 is configured to determine the wireless access point as the predetermined wireless access point if the second detecting unit 315 detects that the SSID name satisfies the predetermined condition.

In conclusion, with the network connection apparatus according to the present disclosure, by searching for a predetermined wireless access point, terminal information of a terminal is read if the predetermined wireless access point is searched out, wherein the terminal information includes a terminal identifier and a terminal MAC address of the terminal; the terminal information is sent to the predetermined wireless access point, such that the predetermined wireless access point forwards the terminal information to a network provision server whereupon the network provision server stores the terminal identifier and adds the terminal MAC address into a network access white list in the predetermined wireless access point, thereby implementing network connection of the terminal, wherein the terminal MAC address in the network access white list is used for instructing the predetermined wireless access point to allow a network access behavior of the terminal, and the terminal identifier is used for providing a tracking identity for the network provision server to track the network access behavior of the terminal. When the predetermined wireless access point is discovered, the terminal information may be automatically read instead of acquiring the terminal information according to user's inputs; the read terminal information is sent to the network provision server, such that a user's tracking identity is identified via the terminal information; the network provision server allows, according to the tracking identity, the terminal to connect to the network. In this way, the problem that the network connection efficiency is low in the case of connecting to the network by inputting a mobile phone number and verification information in the terminal is solved, and an effect of improving the network connection efficiency is achieved.

In addition, an access request for accessing an account server is sent to the predetermined wireless access point, wherein the access request carries a user account. Upon determining that the account server is in the network access white list, the predetermined wireless access point forwards the access request to the account server, wherein the network access white list includes names of various servers which the terminal is allowed to access when the terminal is not networked. The predetermined wireless access point receives a terminal identifier from the account server, wherein the terminal identifier is an identifier that is searched out by the account server and corresponds to the user account. In this way, the problem that, in the case of failure to acquire the terminal identifier from a terminal, the network connection efficiency is low due to connection to the network by inputting a mobile phone number and verification information in the terminal is solved, and an effect of improving the network connection efficiency is achieved.

With respect to the apparatuses in the above embodiments, the specific implementations of operations executed by various modules thereof have been described in detail in the embodiments illustrating the methods, which are not described herein any further.

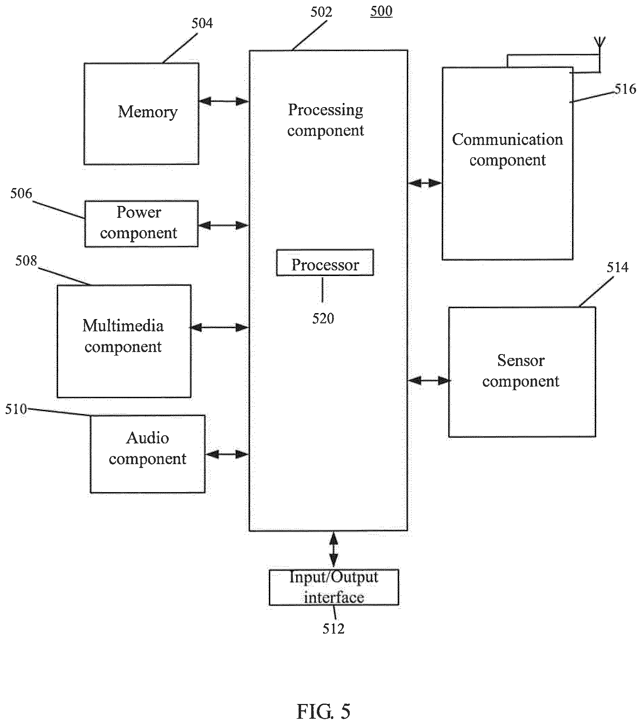

FIG. 5 is a block diagram illustrating an apparatus 500 for use in network connection according to an exemplary embodiment of the present disclosure. For example, the apparatus 500 may be a mobile phone, a computer, a digital broadcast terminal, a messaging device, a gaming console, a tablet, a medical device, exercise equipment, a personal digital assistant, and the like.

Referring to FIG. 5, the apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 518 to execute instructions to perform all or a part of the steps in the above-described methods. In addition, the processing component 502 may include one or more modules which facilitate the interaction between the processing component 502 and other components. For example, the processing component 502 may include a multimedia module to facilitate the interaction between the multimedia component 508 and the processing component 502.

The memory 504 is configured to store various types of data to support the operations of the apparatus 500. Examples of such data include instructions for any application or method operated on the apparatus 500, contact data, phonebook data, messages, pictures, videos, and the like. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power management system, one or more power supplies, and other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive external multimedia data while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, or a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and a peripheral interface module, such as a keyboard, a click wheel, buttons, or the like. The buttons may include, but are not limited to, a home button, a volume button, a starting button, and a locking button.

The sensor component 514 includes one or more sensors to provide status assessments of various aspects of the apparatus 500. For example, the sensor component 514 may detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communications, wired or wirelessly, between the apparatus 500 and other devices. The apparatus 500 may access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 504, executable by the processor 518 in the apparatus 500, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present disclosure will be apparent to those skilled in the art from consideration of the specification and practice of disclosure herein. This application is intended to cover any variations, uses, or adaptations of the present disclosure following the general principles thereof and including such departures from the present disclosure as coming within common knowledge or customary technical means in the art.

It will be appreciated that the present disclosure is not limited to the exact construction that has been described above and illustrated in the accompanying drawings, and that various modifications and changes can be made without departing from the scope thereof.

## Claims

1. A network connection method, comprising:
Searching (101), by a network connection apparatus, for a predetermined wireless access point;
reading, by the network connection apparatus, (102) terminal information of a terminal when the predetermined wireless access point is discovered, the terminal information comprising a terminal identifier and a terminal media access control (MAC) address of the terminal; and
sending (103), by the network connection apparatus, the terminal information to the predetermined wireless access point, such that the predetermined wireless access point forwards the terminal information to a network provision server whereupon the network provision server stores the terminal identifier and adds the terminal MAC address into a network access white list in the predetermined wireless access point;
wherein the terminal MAC address in the network access white list is used for instructing the predetermined wireless access point to allow a network access behavior of the terminal, and the terminal identifier is used for providing a tracking identity for the network provision server to track the network access behavior of the terminal;
**characterized in that** the searching for a predetermined wireless access point comprises:
receiving a service set identifier (SSID) name broadcast by a wireless access point;
comparing the SSID name to a pre-set string of characters;
detecting whether a portion of the SSID name contains the pre-set string of characters; and
determining the wireless access point as the predetermined wireless access point when it is detected that a portion of the SSID name contains the pre-set string of characters.

2. The method according to claim 1, **characterized in that** the reading terminal information of a terminal comprises:
reading the terminal MAC address recorded in the terminal;
reading the terminal identifier recorded in the terminal, or reading a user account which has been logged in to the terminal and acquiring a terminal identifier corresponding to the user account; and
determining the terminal MAC address and the terminal identifier as the terminal information.

3. The method according to claim 2, **characterized in that** the acquiring a terminal identifier corresponding to the user account comprises:
sending an access request for accessing an account server to the predetermined wireless access point, the access request carrying the user account, whereupon the wireless access point determines that the account server is in the network access white list, and then forwards the access request to the account server, the network access white list comprising names of various servers which the terminal is allowed to access when the terminal is not networked; and
receiving the terminal identifier from the account server, the terminal identifier being an identifier that is searched out by the account server and corresponds to the user account.

4. The method according to any one of claims 1 to 3, **characterized in that** the searching for a predetermined wireless access point comprises:
receiving an access point MAC address broadcast by a wireless access point;
detecting whether the access point MAC address is within a predetermined address segment; and
determining the wireless access point as the predetermined wireless access point when it is detected that the access point MAC address is within the predetermined address segment.

5. A network connection apparatus, comprising:
an access point searching module (310), configured to search for a predetermined wireless access point;
an information reading module (320), configured to read terminal information of a terminal when the access point searching module discovers the predetermined wireless access point, the terminal information comprising a terminal identifier and a terminal media access control (MAC) address of the terminal; and
an information sending module (330), configured to send the terminal information read by the information reading module to the predetermined wireless access point, such that the predetermined wireless access point forwards the terminal information to a network provision server whereupon the network provision server stores the terminal identifier and adds the terminal MAC address into a network access white list in the predetermined wireless access point;
wherein the terminal MAC address in the network access white list is used for instructing the predetermined wireless access point to allow a network access behavior of the terminal, and the terminal identifier is used for providing a tracking identity for the network provision server to track the network access behavior of the terminal;
**characterized in that** the access point searching module comprises:
a second receiving unit (314), configured to receive a service set identifier (SSID) name broadcast by a wireless access point;
a second detecting unit (315), configured to compare the SSID name to a pre-set string of characters, and detect whether a portion of the SSID name received by the second receiving unit contains the pre-set string of characters; and
a second determining unit (316), configured to determine the wireless access point as the predetermined wireless access point when the second detecting unit detects that a portion of the SSID name contains the pre-set string of characters.

6. The apparatus according to claim 5, **characterized in that** the information reading module comprises:
a first reading unit (321), configured to read the terminal MAC address recorded in the terminal;
a second reading unit (321), configured to read the terminal identifier recorded in the terminal, or read a user account which has been logged in to the terminal and acquire a terminal identifier corresponding to the user account; and
an information determining unit (323), configured to determine the terminal MAC address read by the first reading unit and the terminal identifier read by the second reading unit as the terminal information.

7. The apparatus according to claim 6, **characterized in that** the second reading unit comprises:
a request sending subunit (3221), configured to send an access request for accessing an account server to the predetermined wireless access point, the access request carrying the user account, whereupon the wireless access point determines that the account server is in the network access white list, and then forwards the access request to the account server, the network access white list comprising names of various servers which the terminal is allowed to access when the terminal is not networked; and
an identifier receiving subunit (3222), configured to receive the terminal identifier from the account server, the terminal identifier being an identifier that is searched out by the account server and corresponds to the user account.

8. The apparatus according to any one of claims 5 to 7, **characterized in that** the access point searching module comprises:
a first receiving unit (311), configured to receive an access point MAC address broadcast by a wireless access point;
a first detecting unit (312), configured to detect whether the access point MAC address received by the first receiving unit is within a predetermined address segment; and
a first determining unit (313), configured to determine the wireless access point as the predetermined wireless access point when the first detecting unit detects that the access point MAC address is within the predetermined address segment.

9. A network connection apparatus, comprising:
a processor (502); and
a memory (504) for storing instructions executable by the processor;
wherein the processor is configured to execute the instructions and thereby perform the steps of the network connection method of any of claims 1 to 4.

10. A computer program which, when being executed on a processor of an apparatus, performs a network connection method according to any one of claims 1 to 4.

## Patentansprüche

1. Netzverbindungsverfahren, das Folgendes aufweist:
Suchen (101), durch eine Netzverbindungsvorrichtung, nach einem vorbestimmten funkgestützten Zugangspunkt;
Lesen, durch die Netzverbindungsvorrichtung, (102) von Endgerätinformationen eines Endgeräts, wenn der vorbestimmte funkgestützte Zugangspunkt entdeckt wird, wobei die Endgerätinformationen eine Endgerätkennung und eine Endgerät-Media Access Control- (MAC) -Adresse des Endgeräts aufweisen; und
Senden (103), durch die Netzverbindungsvorrichtung, der Endgerätinformationen an den vorbestimmten funkgestützten Zugangspunkt, so dass der vorbestimmte funkgestützte Zugangspunkt die Endgerätinformationen an einen Netzbereitstellungsserver weiterleitet, woraufhin der Netzbereitstellungsserver die Endgerätkennung speichert und die Endgerät-MAC-Adresse in eine Weiße Liste für Netzzugang in dem vorbestimmten funkgestützten Zugangspunkt einfügt;
wobei die Endgerät-MAC-Adresse in der Weißen Liste für Netzzugang zum Anweisen des vorbestimmten funkgestützten Zugangspunkts, ein Netzzugangsverhalten des Endgeräts zuzulassen, verwendet wird und die Endgerätkennung zum Bereitstellen einer Verfolgungsidentität für den Netzbereitstellungsserver zum Verfolgen des Netzzugangsverhaltens des Endgeräts verwendet wird;
**dadurch gekennzeichnet, dass** das Suchen nach einem vorbestimmten funkgestützten Zugangspunkt Folgendes aufweist:
Empfangen eines von einem funkgestützten Zugangspunkt ausgesendeten Service Set Identifier- (SSID) -Namens;
Vergleichen des SSID-Namens mit einer voreingestellten Zeichenkette;
Erkennen, ob ein Teil des SSID-Namens die voreingestellte Zeichenkette enthält; und
Bestimmen des funkgestützten Zugangspunkts als den vorbestimmten funkgestützten Zugangspunkt, wenn erkannt wird, dass ein Teil des SSID-Namens die voreingestellte Zeichenkette enthält.

2. Verfahren nach Anspruch 1, **dadurch gekennzeichnet, dass** das Lesen von Endgerätinformationen eines Endgeräts Folgendes aufweist:
Lesen der im Endgerät aufgezeichneten Endgerät-MAC-Adresse;
Lesen der im Endgerät aufgezeichneten Endgerätkennung oder Lesen eines Benutzerkontos, das in das Endgerät eingeloggt wurde, und Erfassen einer dem Benutzerkonto entsprechenden Endgerätkennung; und
Bestimmen der Endgerät-MAC-Adresse und der Endgerätkennung als die Endgerätinformationen.

3. Verfahren nach Anspruch 2, **dadurch gekennzeichnet, dass** das Erfassen einer dem Benutzerkonto entsprechenden Endgerätkennung Folgendes aufweist:
Senden einer Zugangsanforderung für Zugang zu einem Kontoserver an den vorbestimmten funkgestützten Zugangspunkt, wobei die Zugangsanforderung das Benutzerkonto trägt, woraufhin der funkgestützte Zugangspunkt bestimmt, dass der Kontoserver in der Weißen Liste für Netzzugang ist, und dann die Zugangsanforderung an den Kontoserver weiterleitet, wobei die Weiße Liste für Netzzugang Namen verschiedener Server aufweist, zu denen das Endgerät Zugang haben kann, wenn das Endgerät nicht vernetzt ist; und
Empfangen der Endgerätkennung von dem Kontoserver, wobei die Endgerätkennung eine Kennung ist, die von dem Kontoserver ausgesucht wird und dem Benutzerkonto entspricht.

4. Verfahren nach einem der Ansprüche 1 bis 3, **dadurch gekennzeichnet, dass** das Suchen nach einem vorbestimmten funkgestützten Zugangspunkt Folgendes aufweist:
Empfangen einer von einem funkgestützten Zugangspunkt ausgesendeten Zugangspunkt-MAC-Adresse;
Erkennen, ob die Zugangspunkt-MAC-Adresse innerhalb eines vorbestimmten Adressensegments ist; und
Bestimmen des funkgestützten Zugangspunkts als den vorbestimmten funkgestützten Zugangspunkt, wenn erkannt wird, dass die Zugangspunkt-MAC-Adresse innerhalb des vorbestimmten Adressensegments ist.

5. Netzverbindungsvorrichtung, die Folgendes aufweist:
ein Zugangspunktsuchmodul (310), das konfiguriert ist zum Suchen einem vorbestimmten funkgestützten Zugangspunkt;
ein Informationslesemodul (320), das konfiguriert ist zum Lesen von Endgerätinformationen eines Endgeräts, wenn das Zugangspunktsuchmodul den vorbestimmten funkgestützten Zugangspunkt entdeckt, wobei die Endgerätinformationen eine Endgerätkennung und eine Endgerät-Media Access Control- (MAC) -Adresse des Endgeräts aufweisen; und
ein Informationssendemodul (330), das konfiguriert ist zum Senden der von dem Informationslesemodul gelesenen Endgerätinformationen an den vorbestimmten funkgestützten Zugangspunkt, so dass der vorbestimmte funkgestützte Zugangspunkt die Endgerätinformationen an einen Netzbereitstellungsserver weiterleitet, woraufhin der Netzbereitstellungsserver die Endgerätkennung speichert und die Endgerät-MAC-Adresse in eine Weiße Liste für Netzzugang in dem vorbestimmten funkgestützten Zugangspunkt einfügt;
wobei die Endgerät-MAC-Adresse in der Weißen Liste für Netzzugang zum Anweisen des vorbestimmten funkgestützten Zugangspunkts, ein Netzzugangsverhalten des Endgeräts zuzulassen, verwendet wird und die Endgerätkennung zum Bereitstellen einer Verfolgungsidentität für den Netzbereitstellungsserver zum Verfolgen des Netzzugangsverhaltens des Endgeräts verwendet wird;
**dadurch gekennzeichnet, dass** das Zugangspunktsuchmodul Folgendes aufweist:
eine zweite Empfangseinheit (314), die konfiguriert ist zum Empfangen eines von einem funkgestützten Zugangspunkt ausgesendeten Service Set Identifier- (SSID) -Namens;
eine zweite Erkennungseinheit (315), die konfiguriert ist zum Vergleichen des SSID-Namens mit einer voreingestellten Zeichenkette und zum Erkennen, ob ein Teil des von der zweiten Empfangseinheit empfangenen SSID-Namens die voreingestellte Zeichenkette enthält; und
eine zweite Bestimmungseinheit (316), die konfiguriert ist zum Bestimmen des funkgestützten Zugangspunkts als den vorbestimmten funkgestützten Zugangspunkt, wenn die zweite Erkennungseinheit erkennt, dass ein Teil des SSID-Namens die voreingestellte Zeichenkette enthält.

6. Vorrichtung nach Anspruch 5, **dadurch gekennzeichnet, dass** das Informationslesemodul Folgendes aufweist:
eine erste Leseeinheit (321), die konfiguriert ist zum Lesen der im Endgerät aufgezeichneten Endgerät-MAC-Adresse;
eine zweite Leseeinheit (321), die konfiguriert ist zum Lesen der im Endgerät aufgezeichneten Endgerätkennung oder zum Lesen eines Benutzerkontos, das in das Endgerät eingeloggt wurde, und Erfassen einer dem Benutzerkonto entsprechenden Endgerätkennung; und
eine Informationsbestimmungseinheit (323), die konfiguriert ist zum Bestimmen der durch die erste Leseeinheit gelesenen Endgerät-MAC-Adresse und der durch die zweite Leseeinheit gelesenen Endgerätkennung als die Endgerätinformationen.

7. Vorrichtung nach Anspruch 6, **dadurch gekennzeichnet, dass** die zweite Leseeinheit Folgendes aufweist:
eine Anforderungssendeuntereinheit (3221), die konfiguriert ist zum Senden einer Zugangsanforderung für Zugang zu einem Kontoserver an den vorbestimmten funkgestützten Zugangspunkt, wobei die Zugangsanforderung das Benutzerkonto trägt, woraufhin der funkgestützte Zugangspunkt bestimmt, dass der Kontoserver in der Weißen Liste für Netzzugang ist, und dann die Zugangsanforderung an den Kontoserver weiterleitet, wobei die Weiße Liste für Netzzugang Namen verschiedener Server aufweist, zu denen das Endgerät Zugang haben kann, wenn das Endgerät nicht vernetzt ist; und
eine Kennungsempfangsuntereinheit (3222), die konfiguriert ist zum Empfangen der Endgerätkennung von dem Kontoserver, wobei die Endgerätkennung eine Kennung ist, die von dem Kontoserver ausgesucht wird und dem Benutzerkonto entspricht.

8. Vorrichtung nach einem der Ansprüche 5 bis 7, **dadurch gekennzeichnet, dass** das Zugangspunktsuchmodul Folgendes aufweist:
eine erste Empfangseinheit (311), die konfiguriert ist zum Empfangen einer von einem funkgestützten Zugangspunkt ausgesendeten Zugangspunkt-MAC-Adresse;
eine erste Erkennungseinheit (312), die konfiguriert ist zum Erkennen, ob die durch die erste Empfangseinheit empfangene Zugangspunkt-MAC-Adresse innerhalb eines vorbestimmten Adressensegments ist; und
eine erste Bestimmungseinheit (313), die konfiguriert ist zum Bestimmen des funkgestützten Zugangspunkts als den vorbestimmten funkgestützten Zugangspunkt, wenn die erste Erkennungseinheit erkennt, dass die Zugangspunkt-MAC-Adresse innerhalb des vorbestimmten Adressensegments ist.

9. Netzverbindungsvorrichtung, die Folgendes aufweist:
einen Prozessor (502) und
einen Speicher (504) zum Speichern von durch den Prozessor ausführbaren Anweisungen;
wobei der Prozessor konfiguriert ist zum Ausführen der Anweisungen und dadurch Durchführen der Schritte der Netzverbindungsverfahren nach einem der Ansprüche 1 bis 4.

10. Computerprogramm, das bei Ausführung in einem Prozessor einer Vorrichtung die Schritte der Netzverbindungsverfahren nach einem der Ansprüche 1 bis 4 durchführt.

## Revendications

1. Procédé de connexion réseau, comprenant :
rechercher (101), par un appareil de connexion réseau, un point d'accès sans fil prédéterminé ;
lire, par l'appareil de connexion réseau, (102) des informations de terminal d'un terminal lorsque le point d'accès sans fil prédéterminé est découvert, les informations de terminal comprenant un identificateur de terminal et une adresse Media Access Control (MAC) de terminal du terminal ; et
envoyer (103), par l'appareil de connexion réseau, les informations de terminal au point d'accès sans fil prédéterminé, de telle sorte que le point d'accès sans fil prédéterminé achemine les informations de terminal à un serveur d'approvisionnement réseau, sur quoi le serveur d'approvisionnement réseau stocke l'identificateur du terminal et ajoute l'adresse MAC du terminal dans une liste blanche d'accès réseau dans le point d'accès sans fil prédéterminé ;
dans lequel l'adresse MAC du terminal dans la liste blanche d'accès réseau est utilisée pour donner au point d'accès sans fil prédéterminé l'instruction d'autoriser un comportement d'accès réseau du terminal, et l'identificateur du terminal est utilisé pour fournir une identité de suivi pour que le serveur d'approvisionnement réseau suive le comportement d'accès réseau du terminal ;
**caractérisé en ce que** le fait de rechercher un point d'accès sans fil prédéterminé comprend :
recevoir un nom d'identificateur d'ensemble de service (SSID) diffusé par un point d'accès sans fil ;
comparer le nom SSID à une chaîne préréglée de caractères ;
détecter si une partie du nom SSID contient la chaîne préréglée de caractères ; et
déterminer le point d'accès sans fil comme le point d'accès sans fil prédéterminé lorsqu'il est détecté qu'une partie du nom SSID contient la chaîne préréglée de caractères.

2. Procédé selon la revendication 1, **caractérisé en ce que** le fait de lire les informations de terminal d'un terminal comprend :
lire l'adresse MAC du terminal enregistrée dans le terminal ;
lire l'identificateur du terminal enregistré dans le terminal, ou bien lire un compte utilisateur qui a été connecté au terminal et acquérir un identificateur de terminal correspondant au compte utilisateur ; et
déterminer l'adresse MAC du terminal et l'identificateur du terminal comme les informations du terminal.

3. Procédé selon la revendication 2, **caractérisé en ce que** le fait d'acquérir un identificateur de terminal correspondant à un compte utilisateur comprend :
envoyer une requête d'accès pour accéder à un serveur de compte au point d'accès sans fil prédéterminé, la requête d'accès portant le compte utilisateur, sur quoi le point d'accès sans fil détermine que le serveur de compte est dans la liste blanche d'accès réseau, et puis achemine la requête d'accès au serveur de compte, la liste blanche d'accès réseau comprenant des noms de divers serveurs que le terminal est autorisé à accéder lorsque le terminal n'est pas interconnecté en réseau ; et
recevoir l'identificateur du terminal du serveur de compte, l'identificateur du terminal étant un identificateur qui est recherché par le serveur de compte et correspond au compte utilisateur

4. Procédé selon l'une quelconque des revendications 1 à 3, **caractérisé en ce que** le fait de rechercher un point d'accès sans fil prédéterminé comprend :
recevoir une adresse MAC de point d'accès diffusée par un point d'accès sans fil ;
détecter si l'adresse MAC de point d'accès est dans un segment d'adresse prédéterminé ; et
déterminer le point d'accès sans fil comme le point d'accès sans fil prédéterminé lorsqu'il est détecté que l'adresse MAC de point d'accès est dans le segment d'adresse prédéterminé.

5. Appareil de connexion réseau, comprenant :
un module de recherche de point d'accès (310), configuré pour rechercher un point d'accès sans fil prédéterminé ;
un module de lecture d'informations (320), configuré pour lire des informations de terminal d'un terminal lorsque le module de recherche de point d'accès découvre le point d'accès sans fil prédéterminé, les informations de terminal comprenant un identificateur de terminal et une adresse Media Access Control (MAC) de terminal du terminal ; et
un module d'envoi d'informations (330), configuré pour envoyer les informations de terminal lues par le module de lecture d'informations au point d'accès sans fil prédéterminé, de telle sorte que le point d'accès sans fil prédéterminé achemine les informations de terminal à un serveur d'approvisionnement réseau sur quoi le serveur d'approvisionnement réseau stocke l'identificateur de terminal et ajoute l'adresse MAC du terminal dans une liste blanche d'accès réseau dans le point d'accès sans fil prédéterminé ;
dans lequel l'adresse MAC du terminal dans la liste blanche d'accès réseau est utilisée pour donner au point d'accès sans fil prédéterminé l'instruction d'autoriser un comportement d'accès réseau du terminal, et l'identificateur du terminal est utilisé pour fournir une identité de suivi pour que le serveur d'approvisionnement réseau suive le comportement d'accès réseau du terminal ;
**caractérisé en ce que** le module de recherche de point d'accès comprend :
une deuxième unité de réception (314), configurée pour recevoir un nom d'identificateur d'ensemble de service (SSID) diffusé par un point d'accès sans fil ;
une deuxième unité de détection (315), configurée pour comparer le nom SSID à une chaîne préréglée de caractères, et détecter si une partie du nom SSID reçu par la deuxième unité de réception contient la chaîne préréglée de caractères ; et
une deuxième unité de détermination (316), configurée pour déterminer le point d'accès sans fil comme le point d'accès sans fil prédéterminé lorsque la deuxième unité de détection détecte qu'une partie du nom SSID contient la chaîne préréglée de caractères.

6. Appareil selon la revendication 5, **caractérisé en ce que** le module de lecture d'informations comprend :
une première unité de lecture (321), configurée pour lire l'adresse MAC du terminal enregistrée dans le terminal ;
une deuxième unité de lecture (321), configurée pour lire l'identificateur de terminal enregistré dans le terminal, ou bien lire un compte utilisateur qui a été connecté au terminal et acquérir un identificateur de terminal correspondant au compte utilisateur ; et
un module de détermination d'informations (323), configuré pour déterminer l'adresse MAC du terminal lue par la première unité de lecture et l'identificateur de terminal lu par la deuxième unité de lecture comme les informations du terminal.

7. Appareil selon la revendication 6, **caractérisé en ce que** la deuxième unité de lecture comprend :
une sous-unité d'envoi de requête (3221), configurée pour envoyer une requête d'accès pour accéder à un serveur de compte au point d'accès sans fil prédéterminé, la requête d'accès portant le compte utilisateur, sur quoi le point d'accès sans fil détermine que le serveur de compte est dans la liste blanche d'accès réseau, et puis achemine la requête d'accès au serveur de compte, la liste blanche d'accès réseau comprenant des noms de divers serveurs que le terminal est autorisé à accéder lorsque le terminal n'est pas interconnecté en réseau ; et
une sous-unité de réception d'identificateur (3222), configurée pour recevoir un identificateur de terminal du serveur de compte, l'identificateur de terminal étant un identificateur qui est recherché par le serveur de compte et correspond au compte utilisateur.

8. Appareil selon l'une quelconque des revendications 5 à 7, **caractérisé en ce que** le module de recherche de point d'accès comprend :
une première unité de réception (311), configurée pour recevoir une adresse MAC de point d'accès diffusée par un point d'accès sans fil ;
une première unité de détection (312), configurée pour détecter si l'adresse MAC de point d'accès reçue par la première unité de réception est dans un segment d'adresse prédéterminé ; et
une première unité de détermination (313), configurée pour déterminer le point d'accès sans fil comme le point d'accès sans fil prédéterminé lorsque la première unité de détection détecte que l'adresse MAC de point d'accès est dans le segment d'adresse prédéterminé.

9. Appareil de connexion réseau, comprenant :
un processeur (502) ; et
une mémoire (504) pour stocker des instructions exécutables par le processeur ;
dans lequel le processeur est configuré pour exécuter les instructions et effectuer ainsi les étapes du procédé de connexion réseau selon l'une quelconque des revendications 1 à 4.

10. Programme informatique qui, lorsque exécuté sur un processeur d'un appareil, effectue les étapes du procédé de connexion réseau selon l'une quelconque des revendications 1 à 4.
